(19) **Europäisches Patentamt European Patent Office Office européen des brevets**

(11) **EP 1 058 107 B1**

(12) **FASCICULE DE BREVET EUROPEEN**

(45) Date de publication et mention
de la délivrance du brevet:
**14.11.2007 Bulletin 2007/46**

(51) Int Cl.:
***G01M 15/00*** *(2006.01)*

(21) Numéro de dépôt: **00401386.8**

(22) Date de dépôt: **19.05.2000**

(54) **Procédé de détection d'une perturbation du couple observé sur l'arbre de sortie d'un moteur à combustion interne propulsant un véhicule automobile**

Verfahren zur Erfassung von Drehmomentschwankungen am Ausgang eines Verbrennungsmotors in einem Kraftfahrzeug

Procedure for detecting vibrational torque at an output member of an internal combustion engine of an automobile

(84) Etats contractants désignés:
**BE DE ES GB IT**

(30) Priorité: **04.06.1999 FR 9907100**

(43) Date de publication de la demande:
**06.12.2000 Bulletin 2000/49**

(73) Titulaire: **RENAULT S.A.S.**
**92100 Boulogne Billancourt (FR)**

(72) Inventeurs:
• **Beurthey, Stéphan**
**91430 Vauhallan (FR)**
• **Mollet, Jean-Claude**
**92380 Garches (FR)**

(56) Documents cités:
**FR-A- 2 757 632**   **US-A- 4 843 870**
**US-A- 5 504 682**   **US-A- 5 539 644**

**Description**

La présente invention est relative à un procédé de détection d'une perturbation du couple observé sur l'arbre de sortie d'un moteur à combustion interne animant une chaîne cinématique de propulsion d'un véhicule automobile, perturbation résultant de la remontée, dans ladite chaîne, d'efforts dus au roulement du véhicule sur une surface irrégulière.

On sait que la détection d'irrégularités dans le couple délivré par un moteur à combustion interne permet de diagnostiquer des instabilités ou "ratés" de combustion d'un mélange air/carburant dans les cylindres du moteur. Ces irrégularités peuvent être provoquées par divers défauts tels que, par exemple, un dosage défectueux du carburant dans le mélange, un taux de compression insuffisant de ce mélange ou un défaut d'émission d'étincelle par une bougie d'allumage du mélange. Ces défauts réduisent le couple disponible sur l'arbre de sortie du moteur et enrichissent les gaz d'échappement du moteur en hydrocarbures imbrûlés. Divers dispositifs ont été proposés pour diagnostiquer de tels ratés de combustion de manière à pouvoir y porter remède. C'est le cas, notamment, quand la richesse en carburant du mélange air/carburant d'alimentation du moteur est régulée par un dispositif qui tient compte des irrégularités de combustion détectées, comme on le décrit dans la demande de brevet français n° 98 11628 déposée le 17 septembre 1998 par la demanderesse (FR-A-2783565, publié le 24-03-2000).

Quand le moteur propulse un véhicule automobile, on sait par ailleurs que le roulement du véhicule sur une surface irrégulière telle que celle d'une chaussée en mauvais état, provoque dans la chaîne cinématique qui va des interfaces entre les roues du véhicule et le sol jusqu'au moteur, une "remontée" d'efforts qui viennent perturber la vitesse de rotation du moteur et donc le couple que l'on peut observer sur l'arbre de sortie du moteur.

Ces perturbations peuvent évidemment fausser la détection de ratés de combustion basée sur l'observation d'irrégularités dans le couple moteur mesuré à partir de la vitesse de rotation du moteur, les irrégularités résultant de ces perturbations pouvant alors être confondues avec celles que provoquent les ratés de combustion.

On a alors conçu des procédés et des dispositifs qui permettent d'inhiber la détection de ratés de combustion quand cette détection peut être faussée par des perturbations de la mesure du couple moteur induites par l'irrégularité de la surface sur laquelle roule le véhicule (voir notamment les demandes de brevet français n° 96 15789 et 97 01614, respectivement FR-A-2757632 et FR-A-2759414).

La présente invention a précisément pour but de fournir un nouveau procédé de ce type, propre à détecter une perturbation du couple observé sur l'arbre de sortie d'un moteur à combustion interne propulsant un véhicule automobile, par la remontée d'efforts nés du roulement du véhicule sur une surface irrégulière et à inhiber alors des moyens de détection de ratés de combustion du moteur.

La présente invention a aussi pour but de fournir un tel procédé qui soit applicable, en particulier, à l'inhibition de la détection de ratés de combustion en présence de telles perturbations, quand cette détection est prise en compte par un dispositif de régulation de la richesse en carburant du mélange air/carburant d'alimentation du moteur.

La présente invention a encore pour but de fournir un tel procédé qui soit robuste et, en particulier, peu sensible à des erreurs de mesure.

On atteint ces buts de l'invention, ainsi que d'autres qui apparaîtront à la lecture de la description qui va suivre, avec un procédé du type décrit en préambule de la présente description, remarquable en ce que a) on estime le couple moyen $C_{pmh(k)}$ observable sur le vilebrequin du moteur, au passage au point mort haut d'un piston d'un cylindre du moteur à l'aide de la relation :

$$C_{pmh(k)} = J.\pi.(N_i - N_{i-1}).N_i$$

où J est le moment d'inertie de la chaîne cinématique du véhicule, vu dudit vilebrequin,

$N_{i-1}$ et $N_i$ le régime moyen du moteur, mesuré sur deux secteurs angulaires de la rotation du vilebrequin, d'égale extension et symétriques par rapport à la position dudit vilebrequin au passage dudit point mort haut, ou d'une position voisine de celle-ci, et b) on détecte une perturbation dudit couple quand le couple estimé, ou une combinaison linéaire prédéterminée de valeurs successives dudit couple, dépasse un seuil prédéterminé.

Suivant d'autres caractéristiques du procédé selon l'invention, on mesure les durées ($t_{i-1}$, $t_i$) de défilement desdits secteurs angulaires ($\alpha_{i-1}$, $\alpha_i$) devant ladite position et on déduit lesdits régimes moyens des relations $N_{i-1} = \alpha_{i-1}/t_{i-1}$ et $N_i = \alpha_i/t_i$. Les secteurs angulaires $\alpha_{i-1}$ et $\alpha_i$ sont consécutifs et leurs extensions respectives sont préférentiellement de 30° environ.

D'autres caractéristiques et avantages de la présente invention apparaîtront à la lecture de la description qui va suivre et à l'examen du dessin annexé dans lequel la figure unique est un schéma utile à la description du procédé suivant l'invention.

Sur cette figure, on a représenté la "cible" qui est montée couramment sur le vilebrequin 2 qui constitue l'arbre de sortie d'un moteur à combustion interne (non représenté) propulsant un véhicule automobile. Cette cible prend la forme d'une roue présentant à sa périphérie une succession de dents $3_i$, $3_{i+1}$, etc..., régulièrement espacées. Une discontinuité dans cette succession, constituée par exemple par une dent "manquante" 4 ou par une dent de forme différente des autres dents, sert de repère d'origine pour la numérotation des dents, et de repère absolu pour la détection de l'instant du passage au point mort haut PMH d'un des cylindres du moteur, choisi comme cylindre de référence.

Un capteur 5, couramment du type à réluctance variable, est disposé à proximité de la trajectoire de défilement des dents de la cible 1. Il délivre un signal électrique dont les variations temporelles sont une image du profil des dents $3_i$ défilant devant ce capteur. Le traitement de ce signal par un calculateur (non représenté) de gestion du moteur permet d'identifier à chaque instant la position de chacun des pistons des cylindres du moteur et, notamment, le passage de ceux-ci à leurs points morts haut et bas. Dans un moteur à quatre cylindre, par exemple, pour lequel un cycle complet de fonctionnement de ces quatre cylindres correspond à une rotation de 720° du vilebrequin 2, on repère le passage de chacun des quatre pistons à son point mort haut respectif par la position angulaire particulière occupée alors par la cible 1, cette position étant alors repérée dans un cycle de fonctionnement du moteur s'étendant sur 720°. Un cycle complet de fonctionnement du moteur comprend ainsi des passages des pistons aux points morts haut $PMH_k$, k variant de 1 à 8 dans l'exemple considéré. Toutes ces dispositions sont bien connues de l'homme de métier et n'exigent donc pas une description plus détaillée.

On revient à la présente invention pour expliquer le principe qui fonde celle-ci. Quand l'un quelconque des pistons du moteur arrive à son point mort haut (PMH) ou à son point mort bas (PMB), son mécanisme de couplage au vilebrequin, du type bielle-manivelle, présente un bras de levier de longueur sensiblement nulle. Il s'ensuit que l'énergie de la combustion du mélange air/carburant dans ce piston ne transmet alors aucun couple sensible au vilebrequin. Si, au passage du piston à son point mort haut, on observe alors de tout de même un couple en sortie de vilebrequin, celui-ci ne peut résulter que de la remontée d'efforts nés au niveau de la chaussée sur laquelle roule le véhicule, du fait d'une irrégularité de la surface de celle-ci.

Selon la présente invention, pour estimer le couple moyen transmis au roues du véhicule par le vilebrequin du moteur, on repère tout d'abord deux secteurs angulaires $\alpha_{i-1}$ et $\alpha_i$ de même extension angulaire prédéterminée et situés symétriquement sur la cible 1 par rapport à la position angulaire de celle-ci correspondant au passage au point mort haut du piston d'un cylindre de référence du moteur ou par rapport à une position angulaire très proche de ce point mort haut.

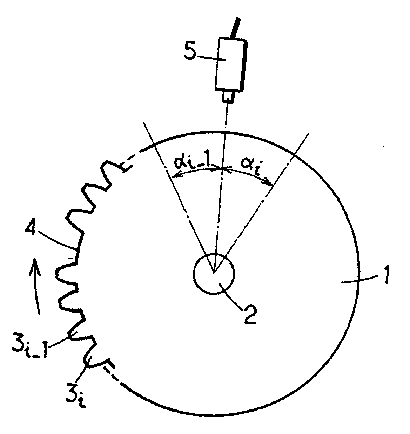

On a repéré ces deux secteurs angulaires $\alpha_{i-1}$ et $\alpha_i$ sur le schéma de la figure 1 dans les positions qu'ils occupent sur la cible 1 par rapport au capteur 5 quant la position de la cible correspond au passage au point mort haut du piston considéré.

Le signal délivré par le capteur 5 permet au calculateur de gestion du moteur évoqué plus haut de mesurer les temps $t_i$ et $t_{i-1}$ mis par les secteurs $\alpha_i$ et $\alpha_{i-1}$ pour défiler devant lui. Les régimes moyens du moteur pendant ces défilements s'établissent alors à :

$$N_{i-1} = \alpha_{i-1}/t_{i-1} \text{ et } N_i = \alpha_i/t_i.$$

On démontre que le couple moyen transmis au véhicule au passage du piston au PMH d'ordre k peut être estimé, avec une bonne approximation, à l'aide de la relation suivante :

$$C_{pmh(k)} = J.\pi.(N_i - N_{i-1}).N_i$$

où J est le moment d'inertie de la chaîne cinématique animée par le moteur, vue du vilebrequin 2.

Suivant un premier mode de mise en oeuvre de la présente invention, on détecte une perturbation du couple observable sur le vilebrequin du moteur quand le couple estimé à l'aide de la relation ci-dessus dépasse un seuil prédéterminé. Ce dépassement étant dû, comme on l'a vu plus haut, à la remontée dans la chaîne cinématique d'efforts nés aux interfaces entre les roues du véhicule et le sol, on inhibe alors des moyens de détection (non représentés) de ratés de combustion, qui pourraient être trompés par ces remontées d'efforts.

Suivant la présente invention, les secteurs angulaires $\alpha_{i-1}$ et $\alpha_i$ doivent être successifs et d'extensions angulaires identiques. Ils peuvent être symétrique par rapport au point mort haut ou décalés de quelques degrés, de 5 à 10 degrés après le point mort haut, par exemple.

On notera que plus l'extension angulaire de ces secteurs est faible, plus les erreurs de mesure sur $t_{i-1}$ et $t_i$ sont grandes. En augmentant cette extension angulaire, on diminue cette erreur mais alors le couple dû à la combustion du mélange air/carburant dans le cylindre considéré peut alors perturber sensiblement l'estimation du couple réalisé par la présente invention. Une extension angulaire de 30° pour chacun des deux secteurs angulaires constitue un bon compromis.

Suivant un autre mode de mise en oeuvre de la présente invention, on détecte une remontée d'efforts dans la chaîne cinématique animée par le moteur quand un estimateur, constitué par une combinaison linéaire de valeurs successives des estimations de couple $C_{pmh(k)}$ calculées au passage des divers pistons du moteur à leurs points morts haut respectifs, lors d'un cycle moteur, dépasse un seuil prédéterminé. On décrit de tels estimateurs dans la demande de brevet français 96 13369 déposée au nom de la demanderesse, à laquelle on pourra se reporter pour plus de détail sur ce point.

A titre d'exemple, dans le cas particulier d'un moteur à quatre cylindres pour lesquels on observe huit passages à des points morts haut pendant un cycle moteur complet, au PMH d'ordre k l'estimateur peut prendre la forme :

$$INSTA_k = |C_{pmh(k)} - C_{pmh(k-1)} - C_{pmh(k-2)} + C_{pmh(k-3)} - C_{pmh(k-4)} + C_{pmh(k-5)} + C_{pmh(k-6)} - C_{pmh(k-7)}|$$

cet estimateur $INSTA_k$ étant calculé au passage au point mort haut de chacun des pistons du moteur, lors d'un cycle de fonctionnement de celui-ci.

Le dépassement d'un seuil prédéterminé par $INSTA_k$, ou par la moyenne de plusieurs valeurs de $INSTA_k$ calculées successivement, est alors significatif d'une remontée d'efforts dans la chaîne cinématique, depuis les interfaces entre les roues du véhicule et le sol.

L'estimateur $INSTA_k$ présente l'avantage d'être peu sensible aux erreurs de mesure, aux dispersions de fabrication de la cible et de positionnement des secteurs angulaires tels que $\alpha_{i-1}$ et $\alpha_i$ sur cette cible, ainsi qu'aux variations de puissance du moteur.

Bien entendu, on ne sortirait pas du cadre de la présente invention en estimant le couple sur le vilebrequin du moteur au passage des pistons dans les cylindres à leurs points morts bas plutôt qu'à leurs points morts haut. De même, des estimateurs d'instabilité combinant linéairement des valeurs estimées du couple, autres que celui donné ci-dessus, pourraient lui être substitués.

**Revendications**

1.  Procédé de détection d'une perturbation du couple observé sur l'arbre de sortie d'un moteur à combustion interne animant une chaîne cinématique de propulsion d'un véhicule automobile, perturbation résultant de la remontée, dans ladite chaîne, d'efforts dus au roulement dudit véhicule sur une surface irrégulière, **caractérisé en ce que** :

    a) on estime le couple moyen ($C_{pmh(k)}$) observable sur le vilebrequin (2) du moteur, au passage au point mort haut d'un piston d'un cylindre du moteur à l'aide de la relation:

    $$C_{pmh(k)} = J.\pi.(N_i - N_{i-1}).N_i$$

    où J est le moment d'inertie de la chaîne cinématique du véhicule, vu dudit vilebrequin,
    ($N_{i-1}$) et ($N_i$) le régime moyen du moteur, mesuré sur deux secteurs angulaires ($\alpha_{i-1}, \alpha_i$) de la rotation du vilebrequin, d'égale extension et symétriques par rapport à la position dudit vilebrequin (2) au passage dudit point mort haut, ou d'une position voisine de celle-ci, et
    b) on détecte une perturbation dudit couple quand le couple estimé, ou une combinaison linéaire prédéterminée de valeurs successives dudit couple, dépasse un seuil prédéterminé.

2.  Procédé conforme à la revendication 1, **caractérisé en ce qu'**on mesure les durées ($t_{i-1}, t_i$) de défilement desdits secteurs angulaires ($\alpha_{i-1}, \alpha_i$) devant ladite position et on déduit lesdits régimes moyens ($N_{i-1}, N_i$) des relations $N_{i-1} = \alpha_{i-1}/t_{i-1}$ et $N_i = \alpha_i/t_i$.

3.  Procédé conforme à l'une quelconque des revendications 1 et 2, **caractérisé en ce que** lesdits secteurs angulaires ($\alpha_{i-1}, \alpha_i$) sont consécutifs.

4.  Procédé conforme à l'une quelconque des revendications 1 à 3, **caractérisé en ce que** l'extension de chacun desdits secteurs angulaires est de 30° environ.

**5.** Procédé conforme à l'une quelconque des revendications 1 à 4, **caractérisé en ce que** ladite position voisine du point mort haut (PMH) est décalée de 5 à 10° environ du point mort haut (PMH), en arrière de celui-ci.

**6.** Procédé conforme à l'une quelconque des revendications 1 à 5, adapté à un moteur à quatre cylindres, **caractérisé en ce que** ladite combinaison linéaire (INSTA$_k$) est représentative de la présence de perturbations dudit couple par remontée d'efforts dans ladite chaîne cinématique et prend la forme :

$$INSTA_k = |C_{pmh(k)} - C_{pmh(k-1)} - C_{pmh(k-2)} + C_{pmh(k-3)} - C_{pmh(k-4)} + C_{pmh(k-5)} + C_{pmh(k-6)} - C_{pmh(k-7)}|$$

où (INSTA$_k$) est la valeur de ladite combinaison au point mort haut (PMH) d'ordre k du cycle de fonctionnement du moteur.

**7.** Application du procédé conforme à l'une quelconque des revendications 1 à 6, à la commande de l'inhibition de moyens de détection de ratés de combustion du moteur, en présence d'une remontée d'efforts perturbateurs d'une mesure du couple moteur dans la chaîne cinématique dudit véhicule automobile.

**Claims**

**1.** Method for detecting perturbation of the torque observed on the output shaft of an internal combustion engine driving a power train of a motor vehicle, this perturbation being caused by the feedback in the said power train of the forces created by the movement of the said vehicle on an irregular surface, **characterized in that**:

a) the mean torque (C$_{pmh(k)}$) observable on the crankshaft (2) of the engine as it passes through the top dead centre of a piston of a cylinder of the engine is estimated by means of the relation

$$C_{pmh(k)} = J.\pi.(N_i - N_{i-1}).N_i$$

where J is the moment of inertia of the power train of the vehicle, seen from the said crankshaft,
(N$_{i-1}$) and (N$_i$) are the mean engine speed, measured in two angular sectors ($\alpha_{i-1}, \alpha_i$) of the rotation of the crankshaft, these sectors having equal extension and being symmetrical about the position of the said crankshaft (2) as it passes the said top dead centre, or a position close thereto, and
b) a perturbation of the said torque is detected when the estimated torque, or a predetermined linear combination of successive values of the said torque, exceeds a predetermined threshold.

**2.** Method according to Claim 1, **characterized in that** the durations (t$_{i-1}$, t$_i$) of the movement of the said angular sectors ($\alpha_{i-1}, \alpha_i$) past the said position are measured and the said mean speeds (N$_{i-1}$, N$_i$) are deduced from the relations N$_{i-1}$ = $\alpha_{i-1}$/t$_{i-1}$ and N$_i$ = $\alpha_i$/t$_i$.

**3.** Method according to either one of Claims 1 and 2, **characterized in that** the said angular sectors are ($\alpha_{i-1}, \alpha_i$) consecutive.

**4.** Method according to any one of Claims 1 to 3, **characterized in that** the extension of each of the said angular sectors is approximately 30°.

**5.** Method according to any one of Claims 1 to 4, **characterized in that** the said position close to the top dead centre (TDC) is shifted by approximately 5° to 10° from the top dead centre (TDC), and to the rear of the latter.

**6.** Method according to any one of Claims 1 to 5, adapted for a four-cylinder engine, **characterized in that** the said linear combination (INSTA$_k$) is representative of the presence of perturbations of the said torque due to the feedback of forces in the said power train, and takes the form:

$$\mathrm{INSTA_k} \;=\; \big| \mathrm{C_{pmh(k)}} - \mathrm{C_{pmh(k-1)}} - \mathrm{C_{pmh(k-2)}} + \mathrm{C_{pmh(k-3)}} - \mathrm{C_{pmh(k-4)}} + \mathrm{C_{pmh(k-5)}}$$
$$+ \mathrm{C_{pmh(k-6)}} - \mathrm{C_{pmh(k-7)}} \big|$$

where ($\mathrm{INSTA_k}$) is the value of the said combination at the top dead centre (TDC) of order k of the operating cycle of the engine.

**7.** Application of the method according to any one of Claims 1 to 6 to the disabling of the means for detecting misfires of the engine, in the presence of a feedback of forces perturbing a measurement of the engine torque in the power train of the said motor vehicle.

**Patentansprüche**

**1.** Verfahren zur Erfassung einer Störung des an der Abtriebswelle eines eine kinematische Kette für den Antrieb eines Kraftfahrzeugs anregenden Verbrennungsmotors beobachteten Drehmoments, einer Störung, die aus dem Anstieg von Kräften in der Kette resultiert, die durch das Rollen des Fahrzeugs auf einer ungleichmäßigen Oberfläche verursacht werden, **dadurch gekennzeichnet, dass**:

a) das mittlere Drehmoment ($\mathrm{C_{pmh(k)}}$), das an der Kurbelwelle (2) des Motors beim Durchgang eines Kolbens eines Zylinders des Motors über den oberen Totpunkt beobachtet werden kann, mit Hilfe der folgenden Beziehung geschätzt wird:

$$\mathrm{C_{pmh(k)}} \;=\; J \cdot \pi \cdot (N_i - N_{i-1}) \cdot N_i$$

wobei J das Trägheitsmoment der kinematischen Kette des Fahrzeugs aus der Sicht der Kurbelwelle ist, ($N_{i-1}$) und ($N_i$) die mittlere Drehzahl des Motors sind, gemessen in zwei Winkelsektoren ($\alpha_{i-1}$, $\alpha_i$) der Drehung der Kurbelwelle mit gleicher Ausdehnung und symmetrisch bezüglich der Position der Kurbelwelle (2) beim Durchgang über den oberen Totpunkt oder einer dieser benachbarten Position, und
b) eine Störung des Drehmoments erfasst wird, wenn das geschätzte Drehmoment oder eine vorbestimmte lineare Kombination aufeinander folgender Werte des Drehmoments einen vorbestimmten Schwellwert überschreitet.

**2.** Verfahren nach Anspruch 1, **dadurch gekennzeichnet, dass** die Zeitdauern ($t_{i-1}$, $t_i$) des Vorbeilaufs der Winkelsektoren ($\alpha_{i-1}$, $\alpha_i$ vor der Position gemessen und die mittleren Drehzahlen ($N_{i-1}$, $N_i$) aus den Beziehungen $N_{i-1} = (\alpha_{i-1}/t_{i-1}$ und $N_i = \alpha_i/t_i$ abgeleitet werden.

**3.** Verfahren nach einem der Ansprüche 1 und 2, **dadurch gekennzeichnet, dass** die Winkelsektoren ($\alpha_{i-1}$, $\alpha_i$ aufeinander folgen.

**4.** Verfahren nach einem der Ansprüche 1 bis 3, **dadurch gekennzeichnet, dass** die Ausdehnung jedes der Winkelsektoren etwa 30° beträgt.

**5.** Verfahren nach einem der Ansprüche 1 bis 4, **dadurch gekennzeichnet, dass** die Position nahe dem oberen Totpunkt (PMH) um etwa 5 bis 10° vom oberen Totpunkt (PMH) hinter diesem verschoben ist.

**6.** Verfahren nach einem der Ansprüche 1 bis 5, angepasst an einen Vierzylindermotor, **dadurch gekennzeichnet, dass** die lineare Kombination ($\mathrm{INSTA_k}$) für das Vorhandensein von Störungen des Drehmoments durch den Anstieg von Kräften in der kinematischen Kette repräsentativ ist und die folgende Form annimmt:

$$\mathrm{INSTA_k} = \mathrm{C_{pmh(k)}} - \mathrm{C_{pmh(k-1)}} - \mathrm{C_{pmh(k-2)}} + \mathrm{C_{pmh(k-3)}} - \mathrm{C_{pmh(k-4)}} + \mathrm{C_{pmh(k-5)}} + \mathrm{C_{pmh(k-6)}} -$$
$$\mathrm{C_{pmh(k-7)}}$$

wobei (INSTA$_k$) der Wert der Kombination am oberen Totpunkt (PMH) der Ordnung k des Betriebszyklus des Motors ist.

7. Anwendung des Verfahrens nach einem der Ansprüche 1 bis 6 auf die Steuerung des Hemmens von Erfassungsmitteln von Fehlverbrennungen des Motors in Gegenwart eines Anstiegs von störenden Kräften einer Messung des Drehmoments in der kinematischen Kette des Kraftfahrzeugs.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9811628
- FR 2783565 A
- FR 9615789
- FR 9701614
- FR 2757632 A
- FR 2759414 A
- FR 9613369